(19) Europäisches Patentamt
European Patent Office
Office européen des brevets

(11) **EP 2 964 822 B1**

(12) **EUROPEAN PATENT SPECIFICATION**

(45) Date of publication and mention
of the grant of the patent:
**03.07.2019 Bulletin 2019/27**

(21) Application number: **14712997.7**

(22) Date of filing: **07.03.2014**

(51) Int Cl.:
*D04H 1/74* *(2006.01)*    *D04H 3/002* *(2012.01)*
*D06M 11/51* *(2006.01)*    *D06M 15/15* *(2006.01)*
*D06M 15/643* *(2006.01)*    *F41H 1/02* *(2006.01)*
*F41H 5/02* *(2006.01)*    *F41H 5/04* *(2006.01)*
*D04H 1/4242* *(2012.01)*    *D06M 13/02* *(2006.01)*
*D06M 101/40* *(2006.01)*    *C01B 32/168* *(2017.01)*
*B82Y 30/00* *(2011.01)*    *B82Y 40/00* *(2011.01)*

(86) International application number:
**PCT/US2014/022097**

(87) International publication number:
**WO 2014/138683 (12.09.2014 Gazette 2014/37)**

(54) **METHOD OF COUPLING AND ALIGNING CARBON NANOTUBES IN A NONWOVEN SHEET AND ALIGNED SHEET FORMED THEREFROM**

VERFAHREN ZUM VERBINDEN UND AUSRICHTEN VON KOHLENSTOFFNANORÖHRCHEN IN EINEM VLIESSTOFF UND DARAUS GEFORMTER AUSGERICHTETER STOFF

PROCÉDÉ DE COUPLAGE ET D'ALIGNEMENT DE NANOTUBES DE CARBONE DANS UNE FEUILLE NON TISSÉE ET FEUILLE ALIGNÉE FORMÉE À PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2013 US 201361774788 P**

(43) Date of publication of application:
**13.01.2016 Bulletin 2016/02**

(73) Proprietor: **E. I. du Pont de Nemours and Company Wilmington, DE 19805 (US)**

(72) Inventor: **KNOFF, Warren, Francis Richmond, Virginia 23220 (US)**

(74) Representative: **Dannenberger, Oliver Andre Abitz & Partner Patentanwälte mbB Arabellastrasse 17 81925 München (DE)**

(56) References cited:
WO-A1-2012/177975    WO-A1-2013/016678
WO-A2-2009/029341    WO-A2-2009/058855
US-A1- 2010 227 155

## Description

### Field of Invention

The present invention is directed to a method to couple and align carbon nanotubes in a non-woven sheet. Also the present invention is directed to the formed nonwoven sheet containing aligned carbon nanotubes.

### Background of The Invention

Considerable efforts have been undertaken to create useful articles having commercial applicability from carbon nanotubes. Enhanced mechanical strength, electrical or thermal properties can be theoretically obtained from such articles.

Smalley et al., U.S. Patent No. 7,125,502 issued October 24, 2006 discloses fibers of aligned single-wall carbon nanotubes and a process of making such fibers.

Lashmore et al. U. S. Publication No. 2009/0075545 published March 19, 2009 discloses aligning nonwovens with a yarn or non-woven sheet by use of chemicals including solvents and surfactants.

Liang et al., U.S. Publication No. 2009/0280324, published November 12, 2009 discloses a method of producing a prepreg of a nanoscale fiber film with the fibers impregnated with a resin followed by B-stage curing the resin.

Pasquali et al., U.S. Publication No. 2011/0110843, published May 12, 2011 discloses aligned carbon nanotubes employing extrusion of a super acid solution of carbon nanotubes followed by removal of the super acid solvent.

A need is present for improved nanotube containing articles wherein increased alignment of the nanotubes occurs. One such article is in the form of a sheet.

### Summary

The present invention is directed to a method of aligning carbon nanotubes in a non-woven sheet comprising the steps of:

   (a) providing a non-woven sheet of carbon nanotubes with nanotubes which are not aligned,
   (b) contacting the non-woven sheet of carbon nanotubes with a coupling agent to achieve mechanical coupling between adjacent carbon nanotubes,
   (c) drawing the non-woven sheet of carbon nanotubes with mechanically coupled carbon nanotubes to impart:

      (i) stress among carbon nanotubes and
      (ii) alignment of individual nanotubes in a direction the non-woven sheet is drawn.

In a preferred mode a diluent liquid is employed with the coupling agent.

Also the invention is directed to a non-woven sheet containing aligned carbon nanotubes as evidenced by the full width at half maximum (FWHM) value obtained by wide angle X-ray diffraction.

### Detailed Description

The starting material is a non-woven sheet of carbon nanotubes having non-aligned nanotubes. A suitable sheet is made by Nanocomp Technologies, Inc.

In order to obtain alignment of carbon nanotubes, it is necessary to contact the non-woven sheet with a coupling agent to achieve mechanical coupling between adjacent carbon nanotubes and to allow alignment of at least a portion of the nanotubes.

It is known that an increase in alignment of a non-woven sheet of carbon nanotubes results in increased mechanical strength. The present test measures this increase in mechanical strength by failure strain which in turn correlates to alignment, i.e. increased alignment of the nanotubes.

The term "coupling agent" as defined herein is determined by a test procedure labeled Test Method A. An alternate test procedure is labeled Test Method B.

Test Method A

Part I

A non-woven sheet of carbon nanotubes is initially uniformly wetted with an excess of chlorosulfonic acid.

Thereafter the wetted non-woven sheet is drawn until it breaks. The initial length and final length are recorded and failure strain computed employing the following equation:

$$\text{Failure strain} = (\text{final length} - \text{initial length})/\text{initial length} \times 100.$$

Part IIA

Another non-woven sheet of carbon nanotubes is initially wetted and contacted with an excess of chlorosulfonic acid in combination with a potential coupling agent. The chlorosulfonic acid and potential coupling agent are present in a ratio of 99 to 1 by weight. The wetted and contacted non-woven sheet is drawn until it breaks.
The initial length and final length are recorded and failure strain computed as previously employing the following equation:

$$\text{Failure strain} = (\text{final length} - \text{initial length})/\text{initial length} \times 100.$$

(In the test procedures of Part I and II all variables including rate of strain and temperature are the same. The difference between Part I and Part II is the absence or presence of the coupling agent.)
The results of Part I and Part II are compared employing the following equation:

$$\text{Percent Improvement} = \frac{[\text{Failure Strain Part II} - \text{Failure Strain Part I}]}{\text{Failure Strain Part I}} \times 100$$

Part IIB

The same procedure as Part IIA is followed except the the chlorosulfonic acid and the potential coupling agent are present in a ratio of 99.9 to 0.1 by weight.

Part IIC

The same procedure as Part IIA is followed except the the chlorosulfonic acid and the potential coupling agent are present in a ratio of 90 to 10 by weight.

Test Method B

An alternate test method is identical to Test Method A except sulfuric acid is substituted for chlorosulfonic acid. The sulfuric acid and potential coupling agent are present in ratios of 99 to 1 (Test Method B Part IIA), 99.9 to 0.1 (Test Method B Part IIB) and 90 to 10 (Test Method B Part IIC).
The results are compared in the same manner as Test Method A namely

$$\text{Percent Improvement} = \frac{[\text{Failure Strain Part II} - \text{Failure Strain Part I}]}{\text{Failure Strain Part I}} \times 100$$

With at least one of ratios of Test Method A and Test Method B an improvement of at least 10 percent is necessary to meet a definition of "coupling agent". Preferably the improvement due to the coupling agent will be at least 20 percent and more preferably at least 30 percent.
Examples of coupling agents include those with electron rich molecules (aromatic) with at least two aromatic moieties. Examples include diphenybenzene, triphenylmethane, triphenylbenzene, polystyrene and triphenylene. Further examples include nonaromatic polysilanes and proteins that have a strong affinity for electron rich surfaces such as the SP1 protein of Fulcrum SP Materials.

Diluent Liquid

In a preferred embodiment of the present invention a diluent liquid will be employed with the coupling agent.

EP 2 964 822 B1

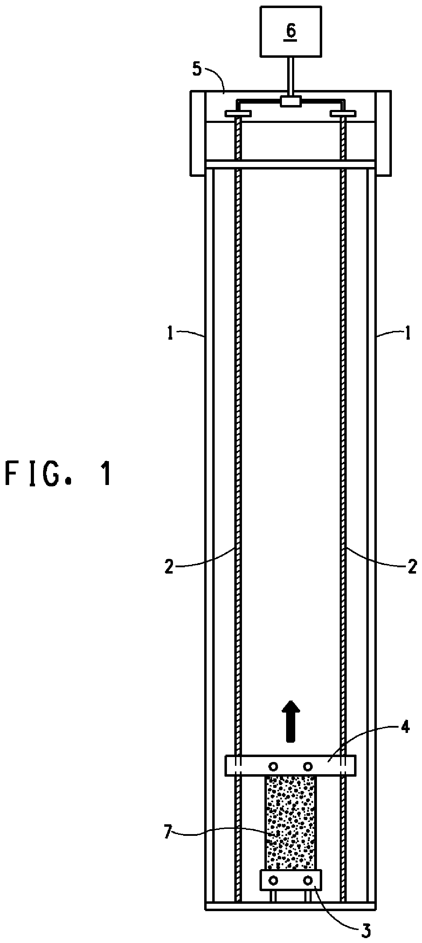

The diluent liquid allows control of the degree of coupling between adjacent carbon nanotubes, allows movement of the carbon nanotubes with respect to each other and facilitates alignment of the carbon nanotubes. Therefore the use of a diluent liquid is highly preferred. More care is needed in the drawing operation of the non-woven sheet without the diluent liquid.

The diluent liquid allows use of less than 100% coupling agent. Dilution of the coupling agent is beneficial since the amount of coupling agent can be controlled to provide optimum results. Illustratively the diluent liquid prevents formation of an excessive number of coupled nanotubes which would interfere with alignment.

The amount of diluent liquid and coupling agent can vary widely with examples being present in a ratio of 1:99 to 99.9:0.1 by weight. A narrower ratio is 1:10 to 10:1.

The diluent liquid facilitates movement of adjacent coupled nanotubes due to stress applied in the drawing step. Therefore the diluent liquid acts as a lubricant adding such movement.

Since the diluent liquid allows control of the degree of coupling between adjacent carbon nanotube and aids movement of carbon nanotubes in the nonwoven sheet, the result is an alignment in carbon nanotubes in the non-woven sheet.

The choice of diluent liquid can vary widely. Useful diluent liquids include strong acids with an ability to protonate the electron rich carbon nanotube walls. Specific examples include chlorosulfonic acid, sulfuric acid, methanesulfonic acid and the solution of ammonium persulfate in sulfuric acid.

Apparatus

Suitable apparatus to undertake Test Method A and Test Method B is shown in the Figure. An outer support 1 contains two parallel threated rods 2. A stationary clamp 3 and moving clamp 4 hold a specimen which is a sheet of non-woven carbon nanotubes. A bearing 5 (attached to a motor or hand crank 6) allows the threated rods to rotate whereby the moving clamps apply stress to the specimen. Excessive stress causes breakage. An alternate apparatus is disclosed in Lashmore U.S. Patent No. 2009/0075545.

Non-woven Sheet of Carbon Nanotubes With Alignment

The aligned non-woven sheet of carbon nanotubes will have a (FWHM) value obtained by wide angle X-ray diffraction. The (FWHM) value will not be greater than 20°, preferably not greater than 10° and even more preferably not greater than 5°.

The test procedure to determine the (FWHM) value is as follows:

The (FWHM) value is determined by means of wide angle X-ray diffraction using Cu K$\alpha$ radiation (wavelength = 0.1542 nm) with the non-woven sheet mounted perpendicular to the beam. Full width at half maximum (FWHM) value of the azimuthal intensity scan of the equatorial reflections appearing in the region of $2\theta = 25°$

The non-woven sheet of carbon nanotubes having alignment has use wherein at least one of the following properties is needed: enhanced mechanical strength electrical application and thermal application. One use is in a lightweight protective vest to withstand penetration of a projectile such as a bullet.

**Example**

To further illustrate the present invention the following prophetic example is provided.

The starting non-woven sheet containing randomly oriented carbon nanotubes is produced by Nanocomp Technologies, Inc., Merrimack, N. H. The basis weight of the sheet is 20 grams per square meter.

Cut a specimen from the non-woven sheet and wet with an excess of a coupling agent of triphenyl methane and a diluent liquid of chlorosulfonic acid (at a weight ratio of 1:99 coupling agent to chlorosulfonic acid

Allow the coupling agent and diluent liquid to thoroughly wet the non-woven sheet at a temperature of 28°C for 5 minutes with an excess of liquid drained by gravity.

Stretch the wetted non-woven sheet in a drawing frame as shown in the Figure to 1.5 times its original length.

Remove the stretched non-woven sheet from the drawing frame, wash with water to remove coupling agent and diluent liquid and dry at 110°C for 12 hours.

Determine the amount of orientation by X-ray diffraction as set forth above.

Obtain a (FWHM) value in the non-woven sheet of not greater than 20°.

**Claims**

**1.** A method aligning carbon nanotubes in a non-woven sheet comprising the steps of:

(a) providing a non-woven sheet of carbon nanotubes with nanotubes which are not aligned,

(b) contacting the non-woven sheet of carbon nanotubes with a coupling agent to achieve mechanical coupling between adjacent carbon nanotubes

(c) drawing the non-woven sheet of carbon nanotubes with mechanically coupled carbon nanotubes to impart:

(i) stress among carbon nanotubes and

(ii) alignment of individual nanotubes in a direction the non-woven sheet is drawn.

2. The method of claim 1, wherein a diluent liquid is employed in step (b).

3. The method of claim 2, wherein the diluent liquid is chlorosulfonic acid, sulfuric acid, methanesulfonic acid or a solution of ammonium persulfate in sulfuric acid.

4. A non-woven sheet containing aligned carbon nanotubes, said sheet having a full width at half maximum as determined by wide angle X-ray diffraction using Cu K$\alpha$ radiation having a wavelength of 0.1542 nm with the non-woven sheet mounted perpendicular to the beam of not greater than 20°, wherein the non-woven sheet comprises aromatic molecules with at least two aromatic moieties.

5. The non-woven sheet containing aligned carbon nanotubes of claim 4, said sheet having a full width at half maximum as determined by wide angle X-ray diffraction of not greater than 10°.

6. The non-woven sheet containing aligned carbon nanotubes of claim 5, said sheet having a full width at half maximum as determined by wide angle X-ray diffraction of not greater than 5°.

7. The non-woven sheet of any one of claims 4 to 6, wherein the aromatic molecules with at least two aromatic moieties are selected from diphenylbenzene, triphenylmethane, triphenylbenzene, polystyrene, and triphenylene.

**Patentansprüche**

1. Verfahren zum Ausrichten von Kohlenstoffnanoröhrchen in einer Vliesbahn, umfassend die folgenden Schritte:

(a) Versehen einer Vliesbahn aus Kohlenstoffnanoröhrchen mit nicht ausgerichteten Nanoröhrchen,

(b) Kontaktieren der Vliesbahn aus Kohlenstoffnanoröhrchen mit einem Haftvermittler, um eine mechanische Kopplung zwischen benachbarten Kohlenstoffnanoröhrchen zu erreichen,

(c) Ziehen der Vliesbahn aus Kohlenstoffnanoröhrchen mit mechanisch gekoppelten Kohlenstoffnanoröhrchen, um Folgendes zu vermitteln:

(i) Spannung zwischen Kohlenstoffnanoröhrchen und

(ii) Ausrichtung einzelner Nanoröhrchen in einer Richtung, in der die Vliesbahn gezogen wird.

2. Verfahren nach Anspruch 1, wobei in Schritt (b) eine Verdünnungsflüssigkeit eingesetzt wird.

3. Verfahren nach Anspruch 2, wobei die Verdünnungsflüssigkeit Chlorsulfonsäure, Schwefelsäure, Methansulfonsäure oder eine Lösung von Ammoniumpersulfat in Schwefelsäure ist.

4. Vliesbahn, die ausgerichtete Kohlenstoffnanoröhrchen enthält, wobei die Bahn eine Halbwertsbreite, wie durch Weitwinkel-Röntgenbeugung unter Verwendung von Cu-Ka-Strahlung mit einer Wellenlänge von 0,1542 nm bestimmt, wobei die Vliesbahn senkrecht zum Strahl angeordnet ist, von nicht mehr als 20° aufweist, wobei die Vliesbahn aromatische Moleküle mit mindestens zwei aromatischen Anteilen umfasst.

5. Vliesbahn, die ausgerichtete Kohlenstoffnanoröhrchen nach Anspruch 4 enthält, wobei die Bahn eine Halbwertsbreite, bestimmt durch Weitwinkel-Röntgenbeugung, von nicht mehr als 10° aufweist.

6. Vliesbahn, die ausgerichtete Kohlenstoffnanoröhrchen nach Anspruch 5 enthält, wobei die Bahn eine Halbwertsbreite, bestimmt durch Weitwinkel-Röntgenbeugung, von nicht mehr als 5° aufweist.

7. Vliesbahn nach einem der Ansprüche 4 bis 6, wobei die aromatischen Moleküle mit mindestens zwei aromatischen Anteilen ausgewählt sind aus Diphenylbenzol, Triphenylmethan, Triphenylbenzol, Polystyrol und Triphenylen.

**Revendications**

1.  Procédé d'alignement de nanotubes de carbone dans une feuille non tissée comprenant les étapes consistant à:

    (a) fournir une feuille non tissée de nanotubes de carbone avec des nanotubes non alignés,
    (b) mise en contact de la feuille non tissée de nanotubes de carbone avec un agent de couplage afin d'obtenir un couplage mécanique entre des nanotubes de carbone adjacents,
    (c) étirer la feuille non tissée de nanotubes de carbone avec des nanotubes de carbone couplés mécaniquement pour conférer:

    (i) un stress parmi les nanotubes de carbone et
    (ii) un alignement de nanotubes individuels dans une direction dans laquelle la feuille non tissée est étirée.

2.  Procédé selon la revendication 1, dans lequel un liquide diluant est utilisé à l'étape (b).

3.  Procédé selon la revendication 2, dans lequel le liquide diluant est l'acide chlorosulfonique, l'acide sulfurique, l'acide méthanesulfonique ou une solution de persulfate d'ammonium dans de l'acide sulfurique.

4.  Feuille non tissée contenant des nanotubes de carbone alignés, ladite feuille ayant une largeur totale à mi-hauteur déterminée par diffraction des rayons X à grand angle en utilisant un rayonnement Cu K$\alpha$ ayant une longueur d'onde de 0,1542 nm, la feuille non tissée étant montée perpendiculairement au faisceau de pas plus de 20°, dans lequel la feuille non tissée comprend des molécules aromatiques avec au moins deux fractions aromatiques.

5.  Feuille non tissée contenant des nanotubes de carbone alignés selon la revendication 4, ladite feuille ayant une largeur totale à mi-hauteur telle que déterminée par diffraction des rayons X à grand angle non supérieure à 10°.

6.  Feuille non tissée contenant des nanotubes de carbone alignés selon la revendication 5, ladite feuille ayant une largeur totale à mi-hauteur telle que déterminée par diffraction des rayons X à grand angle non supérieure à 5°.

7.  Feuille non tissée selon l'une quelconque des revendications 4 à 6, dans laquelle les molécules aromatiques avec au moins deux fractions aromatiques sont choisies parmi le diphénylbenzène, le triphénylméthane, le triphénylbenzène, le polystyrène et le triphénylène.

F I G.  1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7125502 B, Smalley
- US 20090075545 A, Lashmore
- US 20090280324 A, Liang
- US 20110110843 A, Pasquali